# EUROPÄISCHE PATENTSCHRIFT

(11) **EP 1 818 565 B1**
(45) Veröffentlichungstag und Bekanntmachung des Hinweises auf die Patenterteilung: **27.07.2011**
(21) Anmeldenummer: 07001804.9
(22) Anmeldetag: 27.01.2007
(51) Int. Cl.: F16F 9/512

(54) **Schwingungsdämpfer mit amplitudenselektiver Dämpfkraft**
Shock absorber with a damping force depending on the amplitude
Amortisseur de vibrations avec une force d'amortissement dépendant de l'amplitude

(30) Priorität: 09.02.2006 DE 102006005935
(43) Veröffentlichungstag der Anmeldung: 15.08.2007
(73) Patentinhaber: ZF Friedrichshafen AG, 88038 Friedrichshafen (DE)
(72) Erfinder: Hammer, Thomas, 97653 Bischofsheim (DE); Planitzer, Matthias, 97520 Röthlein (DE); Doppernas, Michael-Johann, 96170 Priesendorf (DE); Denner, Manfred, 97711 Massbach (DE)

(56) Entgegenhaltungen:
- EP-A- 1 717 479
- DE-A1- 4 427 273
- DE-B3-102005 045 267

## Beschreibung

Die Erfindung betrifft einen Schwingungsdämpfer mit amplitudenselektiver Dämpfkraft gemäß dem Oberbegriff von Patentanspruch 1.

Die ältere DE 10 2005 045 267 beschreibt einen Schwingungsdämpfer mit amplitudenselektiver Dämpfkraft, die von einer an der Kolbenstange befestigten Baugruppe gesteuert wird. Die Baugruppe besteht aus mehreren ineinander und hintereinander angeordneten Hülsen, die insgesamt drei Strömungswege bestimmen. Ein erster Strömungsweg zwischen einem Kolbenstangenzapfen und einem inneren hülsenförmigen Grundträger dient als Zu- und Abfluss zu einem kolbenstangenseitigen Dämpfventil. Radial außerhalb des hülsenförmigen Grundträgers ist eine Distanzhülse angeordnet, die axial verlaufende Bypasskanäle für eine Strömungsverbindung zwischen der Mantelfläche der Distanzhülse und einer Innenwandung eines Zylinders aufweist.

Der Zu- und der Abfluss in die Bypasskanäle erfolgt über einen Verteilerring, der zwischen der Distanzhülse und einem kolbenstangenseitigen Kolben axial verspannt ist.

Aus der DE 44 27 273 A1 ist ein hydraulischer Schwingungsdämpfer mit amplitudenselektiver Dämpfkraft bekannt. Eine Kolbenanordnung des Schwingungsdämpfers verfügt über eine zur Kolbenstange axial bewegliche Hülse mit endseitigen Kopfteilen. Über die axiale Position der Hülse zur Kolbenstange kann eine Strömungsverbindung geschaltet werden.

Aufgabe der vorliegenden Erfindung ist es, die Bauteile der an der Kolbenstange befestigten Baugruppe zur Erzeugung der amplitudenselektiven Dämpfkraft zu vereinfachen.

Erfindungsgemäß wird die Aufgabe durch die Merkmale des Patenanspruchs 1 gelöst.

Der große Vorteil besteht darin, dass die Kolbenanordnung aus axial geschichteten Einzelbauteilen besteht, die nur zur radialen Zentrierung und Abstützung auf einem kurzen Abschnitt ineinander greifen. Es können sehr einfach auch gesinterte Bauteile verwendet werden, da man an den bauteilen hinterschneidungsfreie Konturen erzeugen kann.

Gemäß einem Merkmal des Hauptanspruchs wird der Teil des Bypasskanals in der Distanzhülse von einer einfachen Durchgangsöffnung gebildet. Eine Queröffnung vom Bypasskanal in die Strömungsverbindung, die von dem Schaltring gesteuert wird, setzt an einer Deckfläche des Kopfteils an, so dass auch das Kopfteil sehr einfach sintertechnisch oder in einem Schrriiedeverfahren herstellbar ist.

Zwecks einfacher und fehlerfreier Montage sind zwischen der Distanzhülse und dem Kopfteil Drehorientierungsflächen ausgeführt. Jedem Bypasskanal in der Distanzhülse ist ein Bypasskanal in dem Kopfteil zugeordnet.

Die Distanzhülse und das Kopfteil werden von einer Spannhülse innerhalb der Kolbenanordnung fixiert. Dabei durchdringt die Kolbenstange die Kolbenanordnung vollständig, so dass die Bauteile der Kolbenanordnung nur auf Druck beansprucht werden.

In der Spannhülse sind Durchströmungsfenster ausgeführt, die den Dämpfmediumstrom zu oder von den Kolbenventilen freigeben.

Das Kopfteil bildet mit der Spannhülse einen Ringraum für ein den Bypasskanal steuerndes Rückschlagventil, so dass das Prinzip der geschichteten Bauweise fortgesetzt wird.

Die Distanzhülse weist auf der Mantelfläche mindestens einen axial verlaufenden Steg auf, wobei in dem mindestens einen Steg ein Bypasskanal verläuft. Bevorzugt kommen mehrere Stege zur Anwendung, so dass die Distanzhülse in der äußeren Gestalt eine zahnradähnliche Kontur aufweist.

Es ist vorgesehen, dass an beiden Enden der Distanzhülse ein Kopfteil angeordnet ist, die als Gleichteile ausgeführt sind.

Mit demselben Ziel der Beschränkung der Teilevielfalt innerhalb der Kolbenanordnung sind die Spannhülse und ein dem Kolben zugeordneter Verteilerring, der einen Anschluss an den mindestens einen Bypasskanal aufweist, als Gleichteile ausgeführt.

Anhand der folgenden Figurenbeschreibung soll die Erfindung näher erläutert werden.

Es zeigt:
- Fig. 1: Längsschnitt durch die Kolbenanordnung
- Fig. 2: weiterer Längsschnitt zur Fig. 1
- Fig. 3: Explosionszeichnung zur Fig. 1
- Fig. 4 u. 5: Distanzhülse als Einzelteil
- Fig. 6 u. 7: Kopfteil
- Fig. 8 - 10: Verteilerring
- Fig. 11 - 13: Spannhülse
- Fig. 14: Kolbenanordnung nach dem Funktionsprinzip der Fig. 1 in einem kolbenstangenseitigen Arbeitsraum

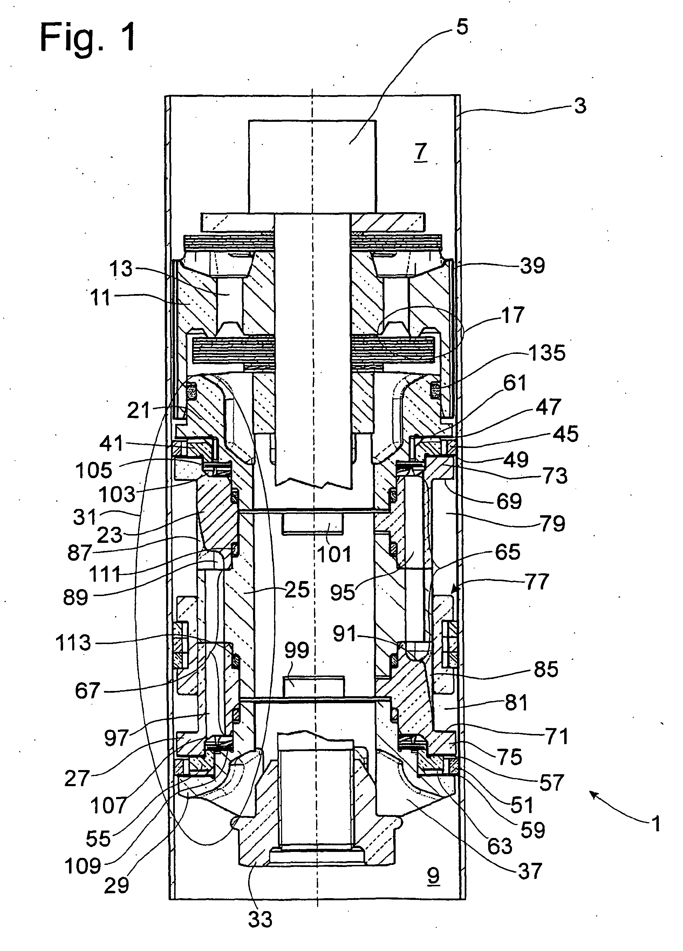

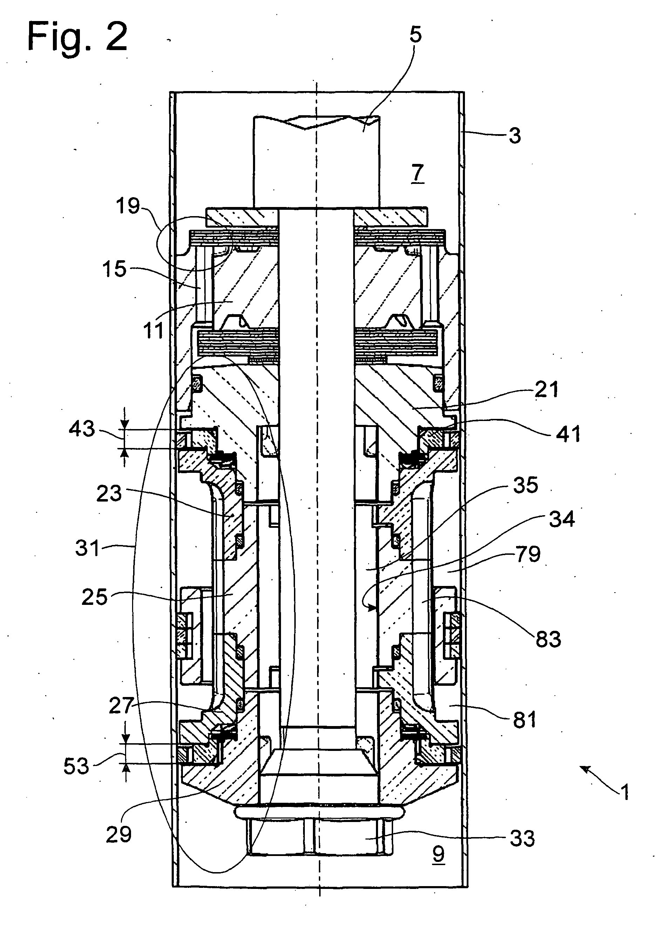

Die Figuren 1 und 2 zeigen eine Kolbenanordnung 1 innerhalb eines dämpfmediumgefüllten Zylinders 3 als Teil eines Schwingungsdämpfers. Dabei ist es unerheblich, ob der Schwingungsdämpfer nach dem Einrohr- oder Zweirohrprinzip aufgebaut ist. Die Kolbenanordnung ist an einer Kolbenstange 5 befestigt und unterteilt den Zylinder 3 in einen kolbenstangenseitigen und einen kolbenstangenfernen Arbeitsraum 7; 9.

Ein Kolben 11 innerhalb der Kolbenanordnung 1 besitzt Durchtrittskanäle 13; 15 (Fig. 2), die mit Ventilscheiben bestückt sind, so dass für beide Durchströmungsrichtungen Dämpfventile 17; 19 zur Verfügung stehen.

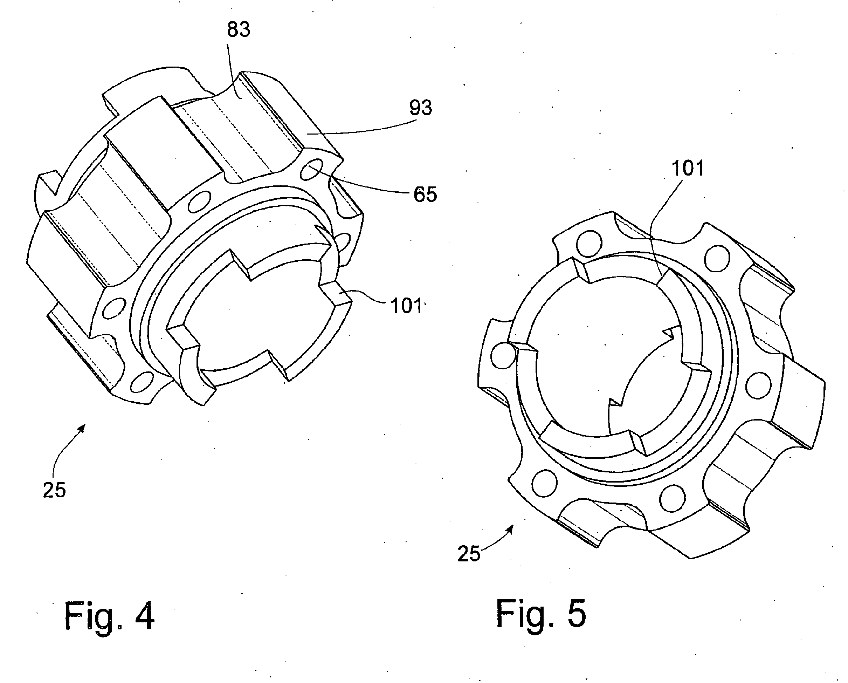

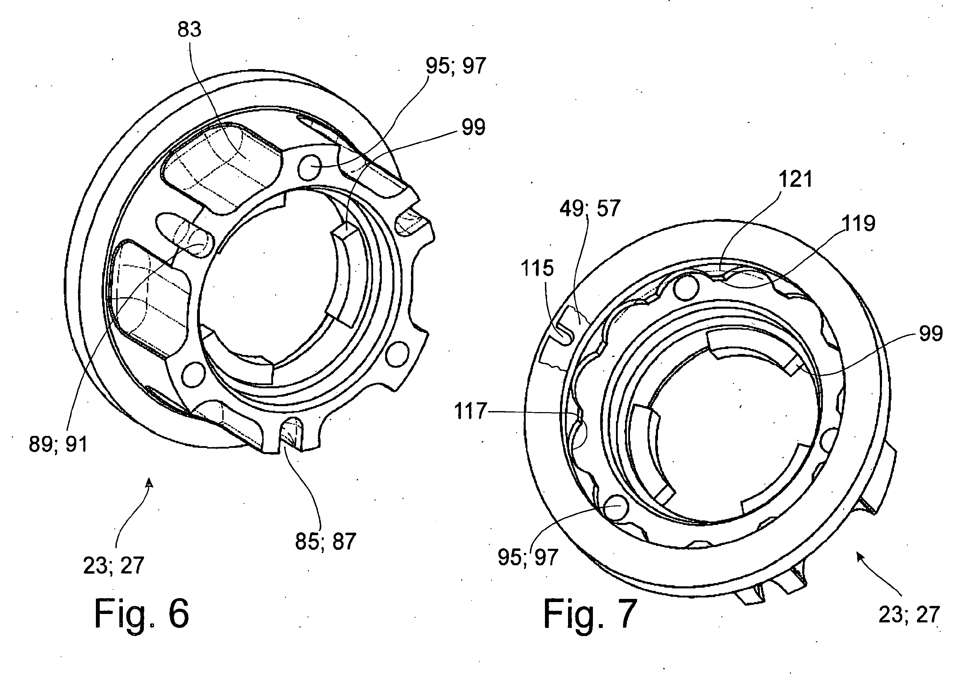

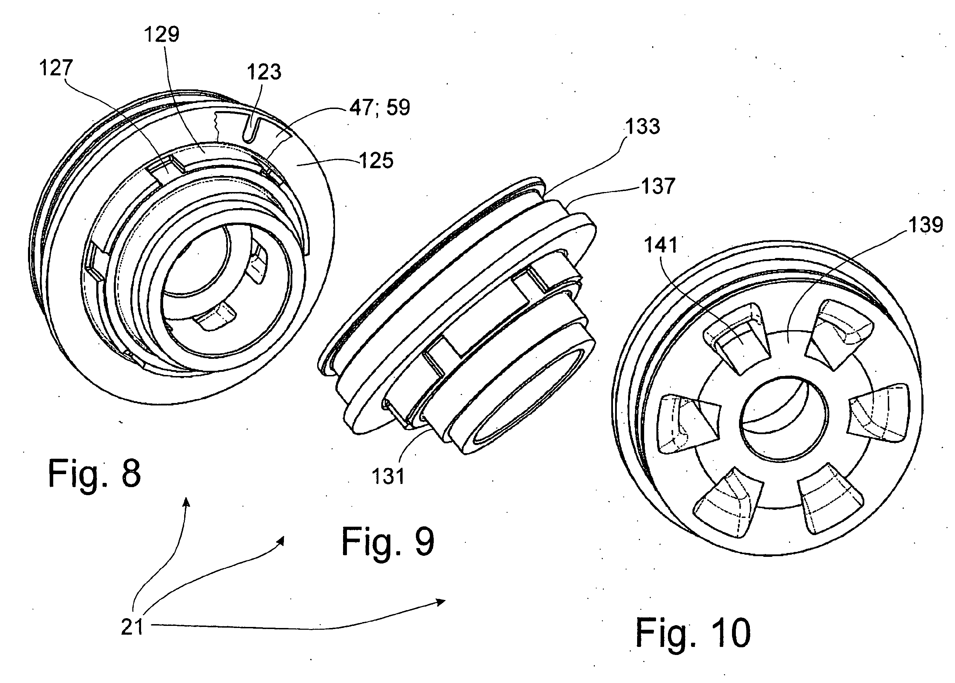

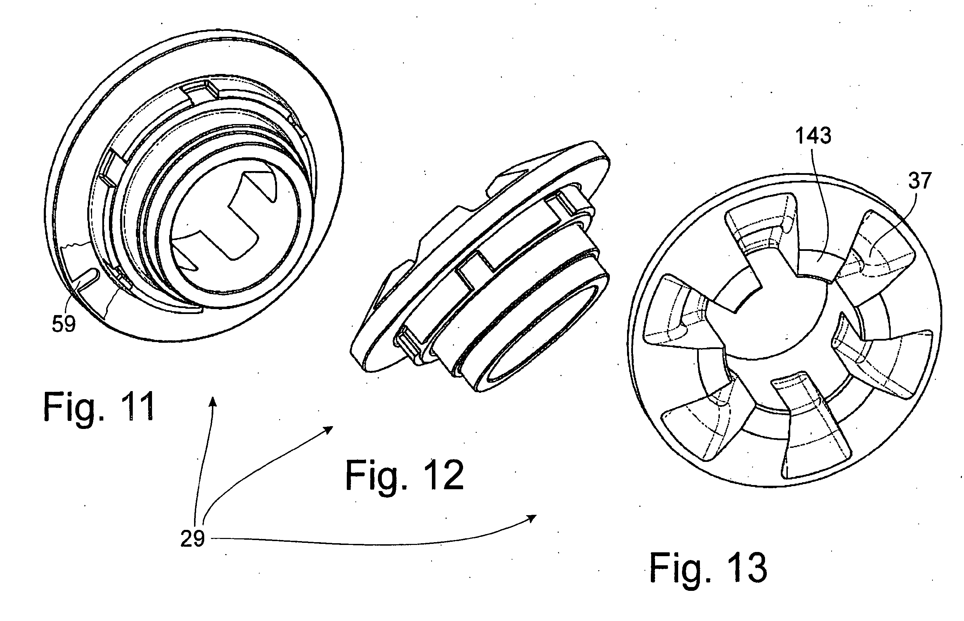

Neben dem Kolben 11 umfasst die Kolbenanordnung in Reihe einen Verteilerring 21, (Figuren 8 -10), ein erstes Kopfteil 23 (Fig. 6 und 7), eine Distanzhülse 25 (Fig. 4 und 5), ein zweites Kopfteil 27 und eine Spannhülse 29, dargestellt in den Fig. 11 -13. Alle genannten Bauteile 21 - 29 bilden eine Baugruppe 31 zur Erzeugung einer amplitudenselektiven Dämpfkraft und werden von der Kolbenstange 5 durchdrungen. Zumindest die beiden Kopfteile 23; 27 sind als Gleichteile ausgeführt. Eine Kolbenmutter 33 fixiert die Baugruppe 31 axial. Die Kolbenstange 5 und die Mantelfläche 34 der Baugruppe 31 bilden einen Ringraum 35 (Fig. 2) zum Dämpfmediumaustausch über die Dämpfventile 17; 19 zwischen den beiden Arbeitsräumen 7; 9, wobei in der Spannhülse 29 Durchströmungsfenster 37 für das Dämpfmedium ausgeführt sind.

Hydraulisch parallel zu den Dämpfventilen 17; 19 besteht eine Strömungsverbindung 39, die beispielsweise durch axiale Kanäle in der Mantelfläche des Kolbens 11 ausgeführt sein können. Zwischen dem Verteilerring 21 und dem ersten Kopfteil 23 ist ein Zwischenring 41 verspannt, der eine Schaltringnut 43 (Fig. 2) für einen axial beweglichen Ventilring 45 in der Höhe begrenzt. Beidseitig am Zwischenring 41 sind noch Voröffnungsscheiben 47; 49 mit jeweils unterschiedlichen randseitigen Aussparungen angeordnet. Eine gleichartige Ausführung eines axial beweglichen Ventilrings 51 in einer Schaltringnut 53 (Fig. 2), die von einem Zwischenring 55 und Voröffnungsscheiben 57,59 gebildet werden, ist zwischen dem zweiten Kopfteil 27 und der Spannhülse 29 ausgeführt. Die Schaltringnuten 43; 53 verfügen über einen Anschluss 61; 63 zu Kanälen 65; 67, die abschnittsweise von den beiden Kopfteilen 23; 27 und der Distanzhülse 25 gebildet werden.

Beide Kopfteile 23; 27 verfügen über Anschlagflächen 69; 71 an ihrem Ringsteg 73; 75, wobei ein axial beweglicher Schaltring 77 gleitend auf den Kopfteilen 23; 27 und der Distanzhülse 25 gelagert ist. Der Schaltring 77 begrenzt mit den Anschlagflächen 69; 71 jeweils einen Ringraum 79; 81, der in seiner Größe in Abhängigkeit der Schaltstellung des Schaltrings variiert. Beide Ringräume 79; 81 stehen über axial verlaufende Verbindungsnuten 83 in den äußeren Mantelflächen der Kopfteile 23; 27 und der Distanzhülse 25 in Verbindung und ermöglichen eine Hinterströmung des Schaltrings (Fig. 2).

Jedes Kopfteil 23; 27 verfügt über mindestens eine Queröffnung 85; 87, die wechselweise an sacklochförmigen Kanälen 89; 91 angeschlossen sind. In diesem Ausführungsbeispiel kommen, wie aus den Darstellungen der Distanzhülse 25 und der Kopfteile 23; 27 nach den Fig. 4 und 5 bzw. 6 und 7 drei sacklochförmige Kanäle 89; 91 für die Kolbenstangeneinfahrbewegung in Richtung des Arbeitsraums 9 und drei Kanäle 91 für die Kolbenstangenausfahrbewegung zur Anwendung. Die Distanzhülse 25 verfügt auf ihrer Mantelfläche über axial verlaufende Stege 93 für die Kanäle 65, wobei zwischen den Stegen 93 die Verbindungsnuten 83 erkennbar sind. Dadurch ergibt sich für die Distanzhülse eine zahnradähnliche Kontur. Für jeweils eine Bewegungsrichtung sind in den Kopfteilen 23; 27 abwechselnd Durchgangsöffnungen 95; 97 und sacklochförmige Kanäle 89; 91 eingeformt, die in den Queröffnungen 85; 87 münden und von einer der Distanzhülse 25 zugewandten Stirnfläche ausgehen. Die Querschnitte der Queröffnungen 85; 87 verringern sich in Richtung der benachbarten Anschlagfläche. Die Kanäle 65; 67 bilden einen Bypasskanal zu den Verbindungsnuten 83 zwischen den Ringräumen 79; 81. Damit jeweils die vorbestimmte Queröffnung 85; 87 mit dem zugeordneten Kanal verbunden ist, bestehen zwischen der Distanzhülse 25 und den beiden Kopfteilen 23; 27 Drehorientierungsflächen 99; 101, so dass eine fehlerhafte Montage ausgeschlossen ist.

Der Verteilerring 21 und das erste Kopfteil 23 bilden einen Ringraum 103, in dem ein Rückschlagventil 105 angeordnet ist, das einen Zustrom von Dämpfmedium in das erste Kopfteil 23 zulässt. Auch das zweite Kopfteil 27 und die Spannhülse 29 bilden einen gleichartigen Ringraum 107 in dem ebenfalls ein Rückschlagventil 109 angeordnet ist, das einen Zustrom in die Kanäle 67 ermöglicht.

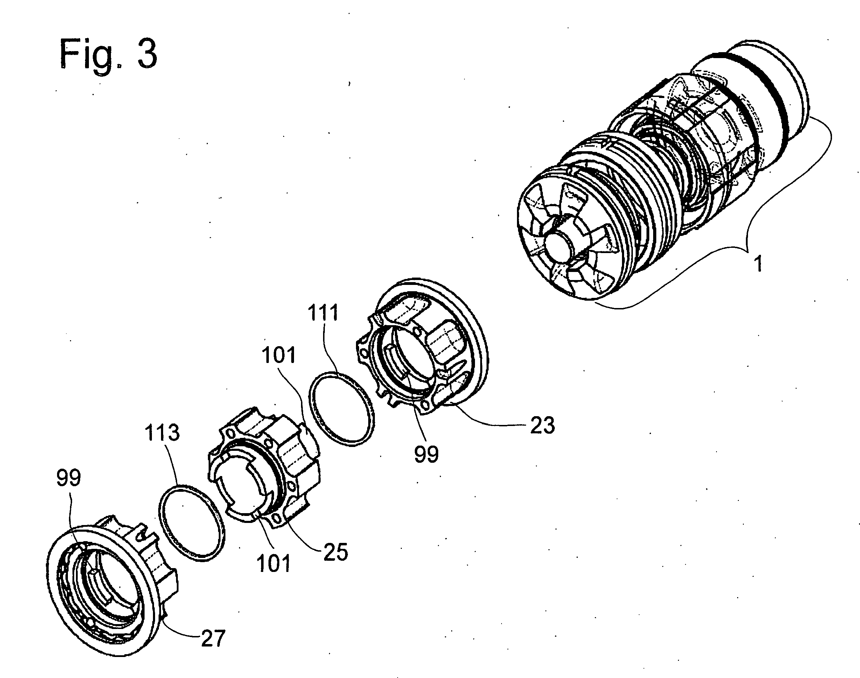

In der Fig. 3 sind die beiden Kopfteile 23; 27 und die Distanzhülse 25 in einer Explosionszeichnung mit Ringdichtungen 111; 113 dargestellt. In dieser Perspektive kann man die ineinander greifenden Drehorientierungsflächen 99; 101 zur winkelgenauen Lagefixierung erkennen.

Die Figuren 6 und 7 zeigen das erste und zweite Kopfteil 23; 27, die als Gleichteile ausgeführt sind, in einer perspektivischen Darstellung. In der Fig. 6 ist besonders gut die gleichmäßige Verteilung der Durchgangsöffnungen 95; 97 der axial verlaufenden Verbindungsnuten 83 und der sacklochförmigen Kanäle 89; 91 mit Queröffnung 85; 87 zu erkennen.

Zum besseren Verständnis ist in der Fig. 7 beispielhaft ein Ausschnitt aus der Voröffnungsscheibe 49; 57 (Fig. 1) mit einem Voröffnungsquerschnitt 115 als Teil der Schaltringnut dargestellt. Die Voröffnungsscheibe 49:57 liegt auf einer Stirnfläche auf, die entweder in Richtung der Spannhülse 29 oder des Verteilerrings 21 weist. Ausgehend von dieser Stirnfläche folgt eine gestufte Durchgangsöffnung, mit einem wellenförmigen Auflageprofil 117. Der innere Durchmesser bildet Zentrierflächen 119 für eine scheibenförmige Feder eines der Rückschlagventile 105; 109 (Fig. 1). Eine Oberseite 121 des Auflageprofils dient als Abhubbegrenzungsfläche für die Ventilscheibe des jeweiligen Rückschlagventils 105; 109, dessen gestrichelt dargestellter Außendurchmesser kleiner ist als die maximale radiale Ausdehnung des Wellenprofils, so dass bei einer maximalen Öffnungsstellung des Rückschlagventils eine Mehrzahl von Durchtrittsöffnungen mit einem kreisabschnittsförmigen Querschnitt vorliegt.

In der Figurenfolge 8 - 10 ist der Verteilerring als Einzelheit dargestellt. Zusammen mit der Fig. 8 wird ein Ausschnitt der Voröffnungsscheibe 47; 59 mit einem Voröffnungsquerschnitt 123 gezeigt, die auf einer Auflagefläche 125 verspannt ist. Auf einem der Auflagefläche folgenden axialen Absatz sind auf dem Umfang mehrere Nuten 127 eingearbeitet, die einen Teil der Anschlüsse 61 (Fig. 1) zum Rückschlagventil 105 bilden. Der Absatz dient als Zentrierfläche 129.

In Fig. 9 ist ein zweiter Absatz erkennbar, der eine Zentrierfläche 131 für die Ventilscheibe des Rückschlagventils 105 bildet. Des Weiteren wird diese Zentrierfläche 131 für das erste Kopfteil 23 verwendet. Am anderen Ende verfügt der Verteilerring 21 über eine Ringnut 133 für eine Dichtung 135 (Fig. 1) und eine Zentrierfläche 137 zum Kolben 11.

Fig. 10 zeigt die Oberseite des Verteilerrings 21 mit einer Spannfläche 139 für die Ventilscheiben des Dämpfventils 17 am Kolben, sowie Durchgangsöffnungen 141 zu den Kolbenventilen 17; 19.

Aus der Figurenfolge 11 - 13 ist ersichtlich, dass die Spannhülse 29 hinsichtlich der Funktionalität sehr stark dem Verteilerring 21 gleicht. Eine Spannfläche 143 auf der Oberseite dient für die Kolbenmutter.

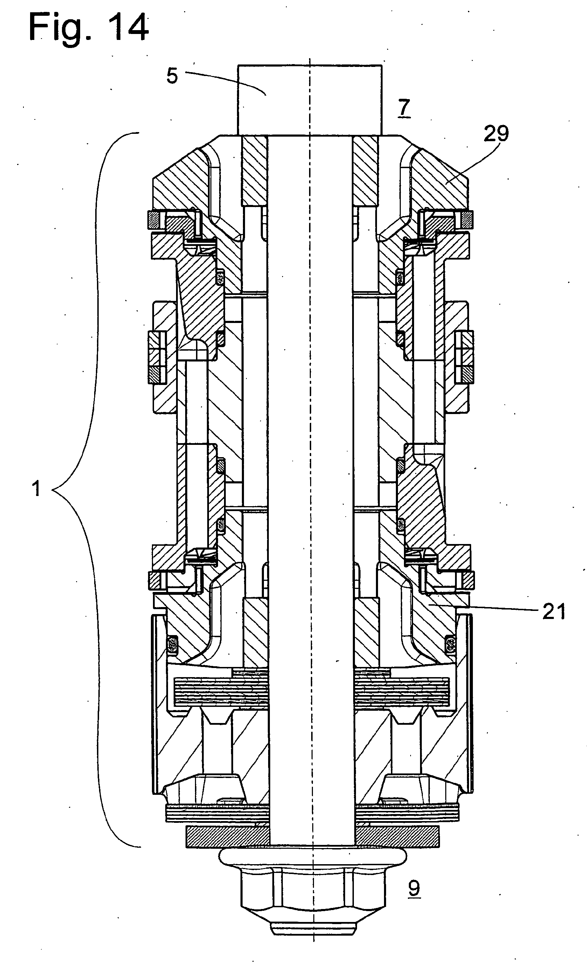

Mit der Fig. 14 soll dokumentiert werden, dass sich die gesamte Kolbenanordnung 1 auch im kolbenstangenseitigen Arbeitsraum 7 erstrecken kann. Bei dieser Variante ist es besonders einfach zu erreichen, dass die Spannhülse 29 und der Verteilerring 21 als Gleichteile ausgeführt sind. Prinzipiell lässt sich diese Möglichkeit auch in der Variante nach Fig. 1 realisieren. Man muss nur dafür sorgen, dass die Innendurchmesser von Verteilerring und Spannhülse über ein Befestigungsgewinde an der Kolbenstange geschoben werden können.

Hinsichtlich der Funktionsweise der Kolbenanordnung wird auf die DE 10 2005 045 267 verwiesen, der Offenbarungsgehalt Teil dieser Beschreibung sein soll.

## Patentansprüche

1. Schwingungsdämpfer mit amplitudenselektiver Dämpfkraft, umfassend eine Kolbenstange (5), die in einem dämpfmittelgefüllten Zylinder (3) axial beweglich geführt ist, wobei die Kolbenstange (5) eine Kolbenanordnung (1) trägt, die den Zylinder (3) in einen kolbenstangenseitigen und einen kolbenstangenfernen Arbeitsraum (7; 9) unterteilt, wobei zwischen den Arbeitsräumen (7; 9) eine Strömungsverbindung (39; 83) vorliegt, die in Abhängigkeit von der Kolbenstangenbewegung von einem axial beweglichen Schaltring (77) gesteuert wird, wobei der Schaltweg des Schaltrings (77) von zwei Anschlagflächen (69; 71) begrenzt wird, wobei hydraulisch parallel zur Strömungsverbindung (39; 83) ein Bypasskanal (65; 67) vorliegt, der von einer Distanzhülse (25) gebildet wird, die zusätzlich einen Zu- und Abfluss (35) zur Kolbenstangenanordnung begrenzt, wobei sich der Distanzhülse (25) zumindest an einem Ende ein Kopfteil (23; 27) anschließt, das die Anschlagfläche (69; 71) aufweist,
**dadurch gekennzeichnet,**
**dass** zwischen der Distanzhülse (25) und dem Kopfteil (23; 27) Drehorientierungsflächen (99; 101) ausgeführt sind und in dem mindestens einen Kopfteil (23; 27) ein Teilabschnitt (95; 97; 91; 89) des Bypasskanals (65; 67) verläuft.

2. Schwingungsdämpfer nach Anspruch 1,
**dadurch gekennzeichnet,**
**dass** die Distanzhülse (25) und das Kopfteil (23; 27) von einer Spannhülse (29) innerhalb der Kolbenanordnung (1) fixiert werden.

3. Schwingungsdämpfer nach Anspruch 1,
**dadurch gekennzeichnet,**
**dass** die Kolbenstange (5) die Kolbenanordnung (1) vollständig durchdringt.

4. Schwingungsdämpfer nach Anspruch 2,
**dadurch gekennzeichnet,**
**dass** in der Spannhülse (29) Durchströmungsfenster (37) ausgeführt sind.

5. Schwingungsdämpfer nach Anspruch 2,
**dadurch gekennzeichnet,**
**dass** das Kopfteil (27) mit der Spannhülse (29) einen Ringraum (107) für ein den Bypasskanal (65; 67) steuerndes Rückschlagventil (109) bildet.

6. Schwingungsdämpfer nach Anspruch 1,
**dadurch gekennzeichnet,**
**dass** die Distanzhülse (25) auf der Mantelfläche mindestens einen axial verlaufenden Steg (93) aufweist, wobei in den mindestens einen Steg (93) ein Bypasskanal (65; 67) verläuft.

7. Schwingungsdämpfer nach Anspruch 1,
**dadurch gekennzeichnet,**
**dass** an beiden Enden der Distanzhülse (25) ein Kopfteil (23; 27) angeordnet ist, die als Gleichteile ausgeführt sind.

8. Schwingungsdämpfer nach Anspruch 2,
**dadurch gekennzeichnet,**
**dass** die Spannhülse (29) und ein dem Kolben (11) zugeordneter Verteilerring (21), der einen Anschluss (61) an den mindestens einen Bypasskanal (65) aufweist, als Gleichteile ausgeführt sind.

## Claims

1. Vibration damper with amplitude-selective damping force, comprising a piston rod (5) which is guided axially movably in a cylinder (3) filled with damping medium, the piston rod (5) carrying a piston arrangement (1) which subdivides the cylinder (3) into a piston rod-side and a piston rod-remote working space (7; 9), there being between the working spaces (7; 9) a flow connection (39; 83) which is controlled by an axially movable switching ring (77) as a function of the piston rod movement, the switching travel of the switching ring (77) being limited by two stop faces (69; 71), there being present hydraulically parallel to the flow connection (39; 83) a bypass duct (65; 67) formed by a spacer sleeve (25) which additionally delimits an inflow and outflow (35) with respect to the piston rod arrangement, the spacer sleeve (25) having adjoining it, at least at one end, a head part (23; 27) which has the stop face (69; 71),
**characterized**
**in that** rotary orientation faces (99; 101) are formed between the spacer sleeve (25) and the head part (23; 27), and a portion (95; 97; 91; 89) of the bypass duct (65; 67) runs in the at least one head part (23; 27).

2. Vibration damper according to Claim 1,
**characterized**
**in that** the spacer sleeve (25) and the head part (23; 27) are fixed inside the piston arrangement (1) by means of a clamping sleeve (29).

3. Vibration damper according to Claim 1,
**characterized**
**in that** the piston rod (5) penetrates completely through the piston arrangement (1).

4. Vibration damper according to Claim 2,
**characterized**
**in that** throughflow apertures (37) are formed in the clamping sleeve (29).

5. Vibration damper according to Claim 2,
**characterized**
**in that** the head part (27) forms, with the clamping sleeve (29), an annular space (107) for a non-return valve (109) controlling the bypass duct (65; 67).

6. Vibration damper according to Claim 1,
**characterized**
**in that** the spacer sleeve (25) has on the lateral surface area at least one axially running web (93), a bypass duct (65; 67) running into the at least one web (93).

7. Vibration damper according to Claim 1,
**characterized**
**in that** a head part (23; 27) is arranged at both ends of the spacer sleeve (25), the said head parts being formed as identical parts.

8. Vibration damper according to Claim 2,
**characterized**
**in that** the clamping sleeve (29) and a distributor ring (21) which is assigned to the piston (11) and has a connection (61) to the at least one bypass duct (65) are formed as identical parts.

## Revendications

1. Amortisseur de vibrations avec une force d'amortissement dépendant de l'amplitude, comprenant une tige de piston (5) qui est guidée de manière déplaçable axialement dans un cylindre (3) rempli de fluide d'amortissement, la tige de piston (5) portant un agencement de piston (1) qui divise le cylindre (3) en un espace de travail (7 ; 9) du côté de la tige de piston et éloigné de la tige de piston, une liaison fluidique (39 ; 83) existant entre les espaces de travail (7 ; 9), laquelle est commandée en fonction du mouvement de la tige de piston par une bague de commutation (77) déplaçable axialement, la course de commutation de la bague de commutation (77) étant limitée par deux surfaces de butée (69 ; 71), un canal de dérivation (65 ; 67) étant disposé hydrauliquement parallèlement à la connexion fluidique (39 ; 83), lequel est formé par une douille d'espacement (25), qui limite en outre un afflux et une évacuation (35) vers et depuis l'agencement de tige de piston, la douille d'espacement (25) étant raccordée au moins à une extrémité à une partie de tête (23 ; 27) qui présente la surface de butée (69 ; 71),
**caractérisé en ce que**
des surfaces d'orientation de rotation (99 ; 101) sont réalisées entre la douille d'espacement (25) et la partie de tête (23 ; 27), et une portion partielle (95 ; 97 ; 91 ; 89) du canal de dérivation (65 ; 67) s'étend dans l'au moins une partie de tête (23 ; 27).

2. Amortisseur de vibrations selon la revendication 1,
**caractérisé en ce que**
la douille d'espacement (25) et la partie de tête (23 ; 27) peuvent être fixées par une douille de serrage (29) à l'intérieur de l'agencement de piston (1).

3. Amortisseur de vibrations selon la revendication 1,
**caractérisé en ce que**
la tige de piston (5) traverse complètement l'agencement de piston (1).

4. Amortisseur de vibrations selon la revendication 2,
**caractérisé en ce que**
des fenêtres d'écoulement (37) sont réalisées dans la douille de serrage (29).

5. Amortisseur de vibrations selon la revendication 2,
**caractérisé en ce que**
la partie de tête (27) forme avec la douille de serrage (29) un espace annulaire (107) pour une soupape de non-retour (109) commandant le canal de dérivation (65 ; 67).

6. Amortisseur de vibrations selon la revendication 1,
**caractérisé en ce que**
la douille d'espacement (25) présente sur la surface d'enveloppe au moins une nervure (93) s'étendant axialement, un canal de dérivation (65 ; 67) s'étendant dans l'au moins une nervure (93).

7. Amortisseur de vibrations selon la revendication 1,
**caractérisé en ce**
**qu'**une partie de tête (23 ; 27) est disposée aux deux extrémités de la douille d'espacement (25), lesquelles sont réalisées sous forme de pièces identiques.

8. Amortisseur de vibrations selon la revendication 2,
**caractérisé en ce que**
la douille de serrage (29) et une bague de distribution (21) associée au piston (11), qui présente un raccord (61) à l'au moins un canal de dérivation (65), sont réalisées sous forme de pièces identiques.
